# FASCICULE DE BREVET EUROPEEN

(11) **EP 2 167 383 B1**
(45) Date de publication et mention de la délivrance du brevet: **23.10.2013**
(21) Numéro de dépôt: 08805981.1
(22) Date de dépôt: 12.06.2008
(51) Int. Cl.: B64D 11/00, B64D 11/04, B64D 45/00

(54) **MEUBLE D'OFFICE D'AÉRONEF ET AÉRONEF COMPORTANT UN TEL MEUBLE**
MÖBELSTÜCK FÜR EINE FLUGZEUGKÜCHE UND FLUGZEUG MIT EINEM SOLCHEN MÖBELSTÜCK
ITEM OF AIRCRAFT GALLEY FURNITURE AND AIRCRAFT COMPRISING SUCH AN ITEM OF FURNITURE

(30) Priorité: 15.06.2007 FR 0704309
(43) Date de publication de la demande: 31.03.2010
(73) Titulaire: AIRBUS OPERATIONS, 31060 Toulouse (FR)
(72) Inventeur: GUERING, Bernard, 31850 Montrabe (FR); GUERING, Jonathan, 31780 Castelginest (FR)
(74) Mandataire: Petit, Maxime
(86) Numéro de dépôt international: PCT/FR2008/051046
(87) Numéro de publication internationale: WO 2009/004217

(56) Documents cités:
- EP-A- 1 440 883
- WO-A-03/024788
- WO-A-03/029077
- US-A1- 2003 066 931
- US-A1- 2004 200 931
- US-A1- 2005 230 550

## Description

L'invention concerne un meuble d'office d'aéronef.

Actuellement, le poste de pilotage des aéronefs est isolé du reste de l'aéronef par une cloison sécurisée qui est dotée d'un blindage. Une porte sécurisée qui est aménagée dans la cloison et permet d'accéder au poste de pilotage ne peut être ouverte que de l'intérieur du poste pour des raisons de sécurité.

Cependant, lors du vol l'équipage du poste de pilotage a besoin d'être ravitaillé en nourriture et en boissons.

Pour ce faire, l'équipage du poste de pilotage doit ouvrir la porte sécurisée pour permettre au personnel de bord (hôtesses et stewards) d'amener à l'intérieur du poste de la nourriture (plateaux repas) et des boissons.

L'ouverture temporaire de la porte donnant accès au poste de pilotage, même si elle est entourée de précautions maximales, constitue néanmoins un point faible du processus de sécurisation à bord des aéronefs.

US 2004/0200931 A1 divulgue un bloc d'office accessible uniquement depuis le poste de pilotage et un bloc office accessible uniquement depuis la zone non sécurisée, les deux zones étant séparées par une porte blindée.

WO 03/024788 A2 divulgue un meuble d'office séparant le poste de pilotage de la zone non sécurisée, les deux parties étant séparées l'une de l'autre par une paroi sécurisée, l'une étant accessible uniquement du poste de pilotage, l'autre uniquement de la zone non sécurisée.

US 2003/0066931 A1 divulgue une cloison sécurisée séparant un poste de pilotage d'une zone non sécurisée et un meuble d'office accessible uniquement depuis la zone non sécurisée

US 2005/0230550 A1 divulgue un décrochement pratiqué dans une paroi sécurisée séparant un poste de pilotage d'une zone non sécurisée, ledit décrochement permettant de loger une installation sanitaire

WO 03/029077 A1 divulgue un système permettant d'améliorer la sécurité dans un aéronef au cours d'un vol, comportant une zone sécurisée pouvant être isolée du reste de l'aéronef par des portes d'accès et étant surveillée par des capteurs.

EP 1 440 883 A1 divulgue un système de sécurité pour aéronef garantissant la neutralisation de tout éventuel agresseur, le mettant hors d'étant de nuire dans possibilité de fuite.

La présente invention a ainsi pour objet un meuble d'office d'aéronef séparant un poste de pilotage d'une zone non sécurisée de l'aéronef, caractérisé en ce qu'il comprend deux parties séparées l'une de l'autre par une paroi sécurisée, l'une des parties étant accessible uniquement du poste de pilotage, l'autre étant accessible uniquement de la zone non sécurisée, un décrochement étant pratiqué dans la partie du meuble accessible du poste de pilotage..

Grâce à ce meuble qui fait office de coin cuisine, l'équipage du poste de pilotage a accès à une zone du meuble pourvue en nourriture et en boissons, qui est isolée et sécurisée vis-à-vis d'une autre zone du meuble équipée en nourriture et en boissons pour les autres occupants de l'aéronef (personnel navigant commercial et passagers).

Ainsi, la porte d'accès au poste de pilotage n'a plus besoin d'être ouverte pour ravitailler les pilotes et copilotes, ce qui réduit encore les risques d'intrusions non autorisées dans le cockpit.

Le décrochement tient compte de l'espace restreint disponible dans le poste de pilotage et peut, en outre, être utilisé comme espace de détente pour l'équipage.

Selon une caractéristique, le décrochement est formé au niveau d'un de coins du meuble afin de dégager un espace libre supplémentaire pour le déplacement de l'équipage.

Agencé à cet endroit du meuble, le dégagement offre à l'équipage un espace agrandi du côté du poste de pilotage, facilitant ainsi les allées et venues du personnel de bord.

Par exemple, le décrochement est disposé à l'aplomb d'une trappe située au niveau du plancher du poste de pilotage, cette trappe permettant aux pilotes et copilotes d'accéder à un niveau de l'aéronef situé en dessous du niveau auquel est agencé le poste de pilotage.

La forme du décrochement correspond par exemple au volume ou à l'encombrement nécessaire au passage d'une personne par la trappe d'accès.

Ainsi, le décrochement peut, à la base du meuble, prendre une forme de coin pour suivre au moins en partie le contour de la trappe et, en remontant vers la partie supérieure du meuble, adopter une forme incurvée qui s'étend au dessus de la trappe de manière à fermer en quelque sorte le décrochement.

Par ailleurs, au niveau d'un décrochement pratiqué dans la partie du meuble accessible uniquement du poste de pilotage, une zone de stockage et de distribution de nourriture et de boissons réservée à l'équipage du poste de pilotage est aménagée.

Divers équipements peuvent équiper de façon utile cette zone (rangements, four, poubelle, espace réfrigéré...) constituant un coin cuisine et détente uniquement pour l'équipage.

Selon une caractéristique, le meuble comporte, dans la partie du meuble accessible du poste de pilotage (zone sécurisée), un bloc évier mobile susceptible d'occuper une position déployée d'utilisation et une position de rangement à l'intérieur du meuble.

Le bloc évier étant escamotable et apte à être rangé dans un logement de la zone sécurisée, il ne génère aucun encombrement supplémentaire lorsqu'il n'est pas utilisé.

Ce bloc est par exemple monté pivotant autour d'un axe d'articulation parallèle au plancher du poste de pilotage pour passer d'une position de rangement à une position de service et inversement.

Selon une caractéristique, le bloc évier est installé au niveau du décrochement, par exemple, dans une zone aménageable autour de celui-ci.

Selon une caractéristique, dans sa position de rangement, le bloc évier est un ensemble monobloc formé de deux pièces moulées et fixées l'une à l'autre.

Ceci permet de réaliser de façon simple un bloc fermé.

En outre, les deux pièces étant obtenues par moulage le bloc est plus simple à fabriquer que par emboutissage.

Selon une caractéristique, le bloc évier comprend une pluralité de rangements formant ainsi un combiné évier-rangements (bloc multifonction). Les rangements sont, par exemple, répartis dans le bloc à la périphérie de la cuvette de l'évier.

Selon un autre aspect, l'invention vise également un aéronef comprenant un meuble d'office tel que brièvement exposé ci-dessus.

D'autres caractéristiques et avantages apparaitront au cours de la description qui va suivre, donnée uniquement à titre d'exemple non limitatif et faite en référence aux dessins annexés, sur lesquels :
- la figure 1 illustre de façon schématique et partielle en perspective l'intérieur d'un poste de pilotage 10 d'un aéronef ;
- la figure 2 est une vue frontale d'un meuble d'office 20 depuis le poste de pilotage ;
- la figure 3 est une vue en perspective montrant l'intérieur du meuble d'office 20 tel qu'il est vu depuis la zone non sécurisée 22 ;
- la figure 4 est une vue en perspective montrant le meuble de la figure 3 contenant des chariots de stockage et de distribution de denrées aux passagers ;
- les figures 5 et 6 montrent en perspective le meuble en utilisation depuis le poste de pilotage avec le bloc évier 40 dans ses deux positions extrêmes ;
- les figures 7 et 8 sont analogues aux figures 5 et 6 et montrent l'intérieur du meuble vu du poste de pilotage ;
- la figure 9 est une vue schématique d'ensemble représentant, dans l'espace, les différents équipements installés dans la zone sécurisée du meuble ;
- la figure 10 est une vue schématique agrandie représentant le bloc évier 40 dans sa position déployée et dans sa position escamotée.

Le poste de pilotage est séparé du reste de l'aéronef, correspondant à une zone non sécurisée 22, par une porte 12 qui est blindée afin d'empêcher toute intrusion par la force à l'intérieur du poste de pilotage.

Durant le vol cette porte reste en permanence fermée grâce au meuble selon l'invention qui permet de ravitailler en nourriture et en boissons l'équipage du poste de pilotage sans avoir besoin d'ouvrir la porte comme par le passé.

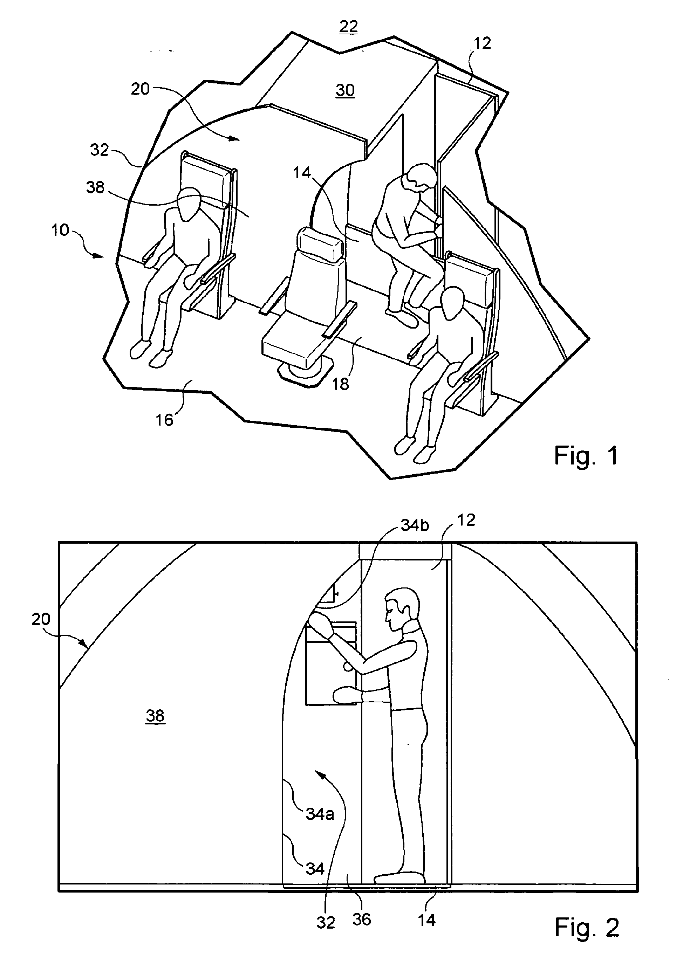

Sur la figure 1, on a représenté une trappe 14 qui est aménagée au niveau du plancher 16 du poste de pilotage pour permettre notamment le passage du pilote et du copilote du poste de pilotage à un niveau 18 inférieur à ce dernier (par exemple niveau de la soute avionique) et inversement.

Cette trappe d'accès est normalement en position fermée, c'est-à-dire agencée à fleur de paroi dans le plancher du poste de pilotage comme représentée sur la figure 2. Elle apparaît en position ouverte sur la figure 1 pour permettre de voir le niveau inférieur 18 auquel l'équipage peut accéder en descendant par une échelle et également le dégagement volumique nécessaire autour d'une personne lors de son passage d'un niveau à l'autre.

Par souci de simplification, l'échelle utilisée par la personne de la figure 1 n'est pas représentée sur cette figure.

Un meuble d'office 20 (connu en terminologie anglo-saxonne sous le terme de « galley ») est disposé entre le poste de pilotage et la zone non sécurisée 22 de l'aéronef et peut être qualifié de meuble d'office mixte sécurisé dans la mesure où il sert de zone de stockage et de distribution de nourriture et de boissons à la fois pour le personnel de bord et les passagers de la zone non sécurisée 22 et pour l'équipage du poste de pilotage 10, tout en respectant les contraintes de sécurité liées au poste de pilotage.

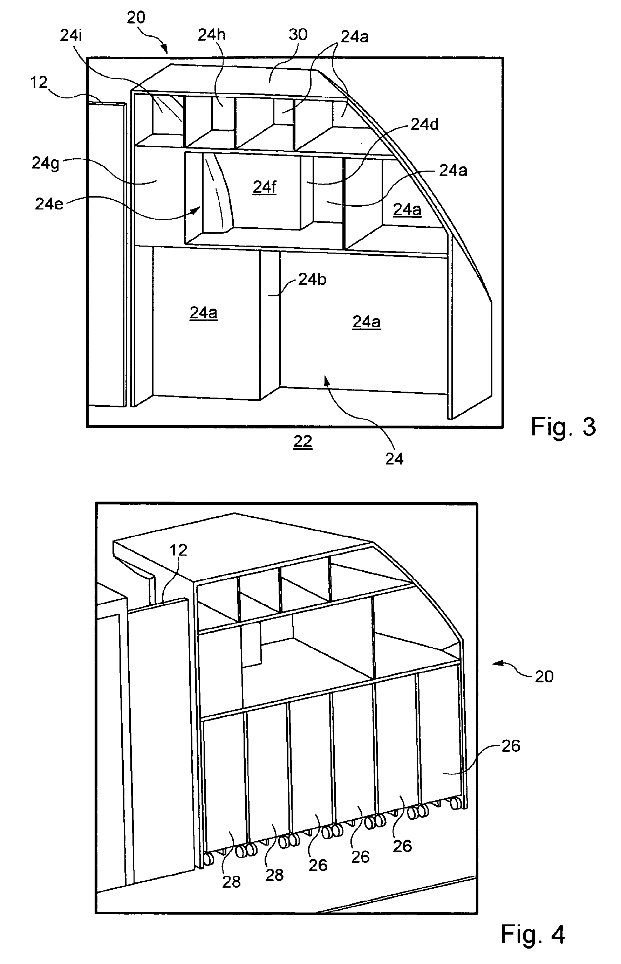

Pour ce faire, une paroi sécurisée 24 représentée sur la figure 3 sépare la partie du meuble 20 accessible uniquement depuis la zone 22 non sécurisée de la partie du meuble accessible uniquement depuis le poste de pilotage et visible sur la figure 2.

Comme représenté sur la figure 3, la paroi sécurisée qui comporte dans son épaisseur un blindage analogue à celui de la porte 12 est très irrégulière dans la mesure où elle délimite de nombreux renfoncements et recoins de formes variées à l'intérieur du meuble.

Ces renfoncements servent d'espaces de rangement et sont disposés à différentes hauteurs (niveaux) du meuble.

Ainsi, en partie basse du meuble la paroi 24 comprend successivement, de la droite vers la gauche, une première paroi de fond 24a donnant sa profondeur maximale au meuble, puis une paroi 24b formant un décroché perpendiculaire à la paroi 24a, vers l'avant du meuble, et une paroi 24c parallèle à la paroi 24a et formant la paroi de fond du meuble dans cette partie de celui-ci.

La paroi 24c est située plus en avant que la paroi 24a par rapport à la face avant du meuble et l'espace de rangement au droit de cette paroi est donc moins profond.

Comme représenté sur la figure 4, des chariots (connus en terminologie anglo-saxonne sous le terme de « trolleys ») sont rangés dans les espaces situés entre les parois de fond 24a et 24c et la face avant du meuble. Compte tenu des différences de profondeur entre les deux espaces de rangements, des chariots 26 de profondeurs maximales sont rangés en vis-à-vis de la paroi 24a, tandis que, dans l'espace en regard de la paroi 24c, des chariots 28 de moins grandes longueurs sont rangés (par exemple un chariot ayant une longueur égale à la moitié de celle des chariots 26).

Au niveau du meuble situé au dessus des rangements pour chariots de distribution de nourriture et de boissons aux passagers, la paroi 24 est configurée de façon différente puisque deux décrochés 24d et 24e sont pratiqués :
- le décroché 24d s'étend à partir de la paroi de fond 24a vers l'avant pour rejoindre une paroi de fond 24f plus proche de la face avant du meuble que la paroi de fond 24a et
- le décroché 24e présente d'abord une forme volumique s'étendant vers l'avant à partir de la paroi 24f et qui est plus large à sa base qu'à sa partie supérieure, cette forme étant suivie d'une face plane perpendiculaire à la paroi 24f et rejoignant la face avant du meuble où est agencée une paroi de face avant 24g.

Dans ces différents espaces (niches, recoins,...), sont installés différents équipements tels que des distributeurs de boissons et des plans de travail sont également aménagés.

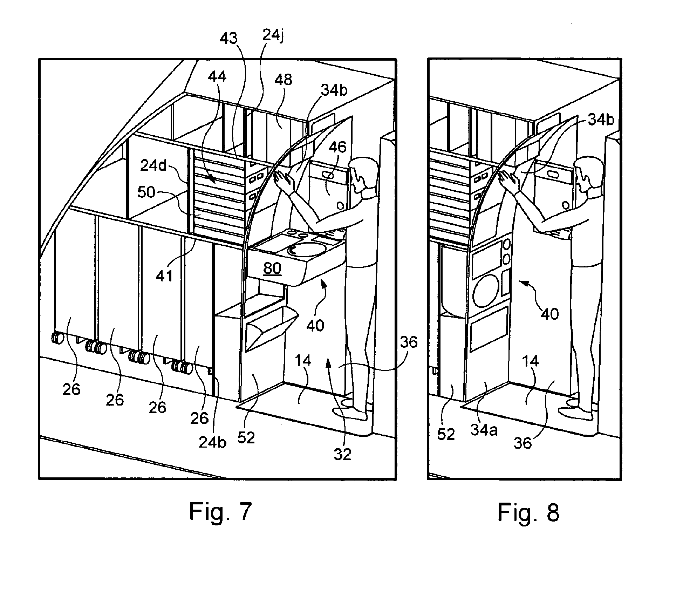

Au niveau supérieur (dernier niveau), deux décrochés sont également présents, un premier décroché plan non représenté sur la figure 3 (mais représenté à la figure 7 par la référence 24j) s'étend perpendiculairement à partir de la paroi de fond 24a pour ensuite former une paroi de fond 24h et un second décroché volumique 24i s'étend à partir de la paroi de fond 24h, ce décroché prolongeant la forme volumique du décroché 24e du niveau inférieur en direction du panneau supérieur 30 formant le dessus du meuble.

À cet étage supérieur différent renfoncements sont prévus pour y loger, par exemple, des tiroirs de stockage de nourriture.

On notera que différentes cloisons verticales sont prévues au second et au troisième niveau pour délimiter des compartiments de formes et de tailles diverses.

Comme représenté sur les figures 1 et 2, le meuble 20 présente un décrochement 32 dans une partie de ce meuble qui est uniquement accessible depuis le poste de pilotage.

Ce décrochement est formé à l'un des coins de ce meuble qui jouxte le couloir situé derrière la porte d'accès 12 du côté du poste de pilotage. Cette zone située entre la porte et les sièges installés dans le poste de pilotage (figure 3) est généralement exigüe et la présence d'un décrochement/dégagement dans cette zone facilite le déplacement des personnes. Le décrochement est plus particulièrement formé sur une partie seulement de la profondeur et par exemple sur une partie de la hauteur du meuble.

Le décrochement 32 est par exemple réalisé à l'aplomb de la trappe 14.

Le volume du décrochement 32 est défini notamment par l'espace nécessaire autour d'une personne qui utilise la trappe d'accès pour descendre ou monter.

Ainsi, la géométrie du décrochement 32 est définie par deux parois adjacentes du meuble, à savoir les parois 34 et 36 qui forment un angle droit et sont agencés le long de deux bords adjacents de la trappe 14.

La paroi 36 est plane verticalement du bas vers le haut tandis que la paroi adjacente 34 qui forme un décroché ou retrait par rapport à la paroi 38 du meuble 20 est plane et verticale dans sa partie inférieure 34a jusqu'à mi-hauteur. Elle s'incurve ensuite progressivement en remontant vers le haut du meuble depuis la mi-hauteur de manière à former une paroi concave 34b vue de l'extérieur du meuble.

La figure 2 représente le profil de la paroi 34 et, notamment, la partie supérieure incurvée de façon progressive.

Le décrochement 32 permet ainsi de s'adapter au mieux à l'environnement lié à la trappe puisqu'il épouse le contour de la trappe 14 en partie basse et redonne du volume aménageable au meuble en partie haute, tout en restant parfaitement ergonomique.

On notera que les formes courbes du panneau avant 34 se retrouvent dans les volumes des décrochés 24f et 24i précédemment mentionnés en relation avec la figure 3.

On voit ainsi que les volumes 24f et 24i correspondent à des portions du volume du décrochement 32.

La partie sécurisée du meuble bordant le décrochement 32 comporte une zone sécurisée aménageable pour l'équipage du poste de pilotage et qui peut être utilisée, notamment, pour le stockage et la distribution de nourriture et de boissons comme on le verra par la suite.

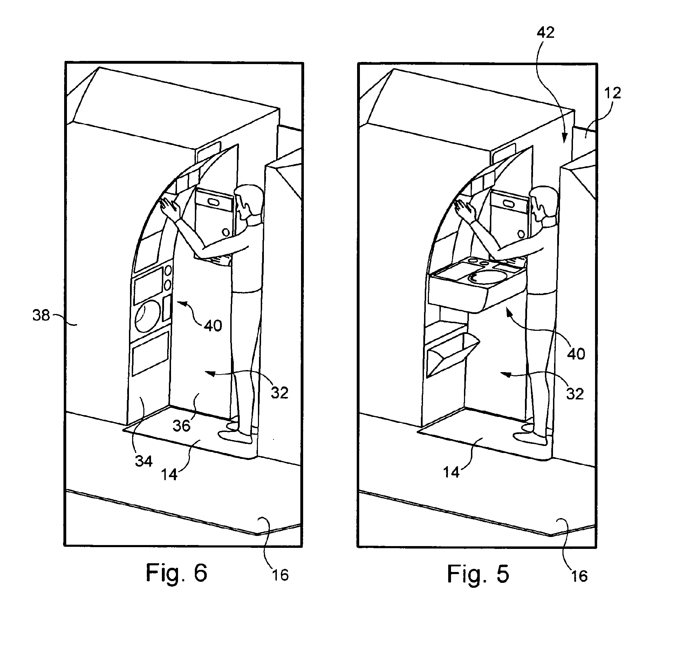

En particulier, la zone du meuble entourant le décrochement comporte un bloc évier 40 agencé par rapport à la paroi 34 du décrochement et qui est mobile entre deux positions : une position déployée d'utilisation ou de service représentée à la figure 5 et une position de rangement à l'intérieur du meuble, comme illustré sur la figure 6.

En installant le bloc évier de façon escamotable ou rabattable au niveau d'une des parois délimitant le décrochement on peut ainsi utiliser de façon optimale cet espace lorsque la trappe est fermée (figure 5). Le caractère escamotable du bloc permet aussi de ne pas empiéter sur l'espace nécessaire au passage d'une personne utilisant la trappe d'accès 14 lorsque cette dernière doit être ouverte.

On notera que le bloc amovible 40 fait saillie par rapport à la paroi 34 du meuble sur une dimension correspondant à la largeur de la paroi 36 pour ne pas empiéter sur la largeur du couloir 42 agencé entre la porte 12 du poste de pilotage et le poste de pilotage lui-même.

Il convient de remarquer que le décrochement 32 est également formé en retrait par rapport au couloir.

On a représenté sur les figures 7 et 8 le bloc évier dans ses deux positions extrêmes en enlevant la paroi 38 du meuble qui ferme ce dernier du côté du poste de pilotage.

Sur la figure 7 les chariots 26 de la figure 4 sont représentés rangés côte à côte dans l'espace de rangement disponible.

On notera que la paroi 38 correspond en partie à la paroi de fond sécurisée 24a décrite en référence à la figure 3 et qui s'arrête au niveau des parois sécurisées 24b, 24d et 24j (représentées en double trait sur cette figure).

Les parois horizontales 41 et 43 reliant les parois 24b, 24d et 24j entre elles sont également sécurisées, comme toute la frontière séparant la partie du meuble accessible depuis le poste de pilotage de la partie restante du meuble.

Comme partiellement représenté sur la figure 7, les parois blindées 24b, 24d et 24j délimitent partiellement une zone 44 aménageable dans la partie du meuble accessible uniquement depuis le poste de pilotage, et situé à la périphérie du décrochement 32.

On notera que la partie de paroi 38 qui s'étend au-delà des parois 24b, 24d, 24j et qui ferme la zone 44 n'est pas nécessairement sécurisée, à moins qu'il ne soit plus facile de fabriquer une seule paroi 38 entièrement sécurisée.

Les parois ou parties de parois 24c, 24e, 24f, 24g, 24h et 24i de la figure 3 délimitent également partiellement, en coopération avec les parties de parois 24b, 24d et 24j, la zone 44 du côté du meuble tourné vers la zone non sécurisée 22.

La zone 44 entourant sur deux côtés le décrochement 32 est aménagée à l'intérieur du meuble dans sa partie sécurisée, sensiblement suivant une forme en L en vue de dessus, les deux branches du L bordant le décrochement 32.

On trouve ainsi dans la partie sécurisée du meuble bordant le décrochement un four 46, un poste 48 de distribution de boissons tel que du café et de l'eau fraîche, une unité de stockage réfrigérée 50, une poubelle 52 et le bloc évier rabattable 40.

On notera que le four 46 est aménagé derrière la paroi 36, la porte avant du four étant agencée à fleur de paroi.

Le bloc évier escamotable 40 et la poubelle 52 sont, quant à eux, agencés derrière la paroi 34 dans un logement prévu à cet effet, en partie inférieure 34a, c'est-à-dire dans la zone où la paroi 34 est plane.

La figure 8 montre le logement dans lequel le bloc évier 40 est installé en position de rangement.

Il est ainsi agencé au dessus de la poubelle 52, occupant de cette façon tout l'espace disponible entre la paroi 34 et la paroi arrière sécurisée 24b.

Derrière la partie incurvée 34b de la paroi 34, on trouve, au dessus du niveau où est agencé le bloc évier 40 en position déployée, l'unité réfrigérée 50 dans laquelle sont empilés plusieurs plateaux. Ces plateaux occupent la quasi-totalité de l'espace libre entre la paroi 34b et la paroi de fond 24d sécurisée.

Par ailleurs, les distributeurs 48 sont agencés en partie supérieure du meuble, dans un volume qui a été rendu aménageable du fait de la courbure donnée à la partie supérieure 34b de la paroi 34.

L'espace disponible de la zone sécurisée 44 est ainsi utilisé de façon optimale.

La partie basse des distributeurs 48 où sont situés les becs verseurs ou robinets fait saillie par rapport à la paroi incurvée 34b pour faciliter la distribution en boissons en permettant l'accès aux actionneurs de ces équipements.

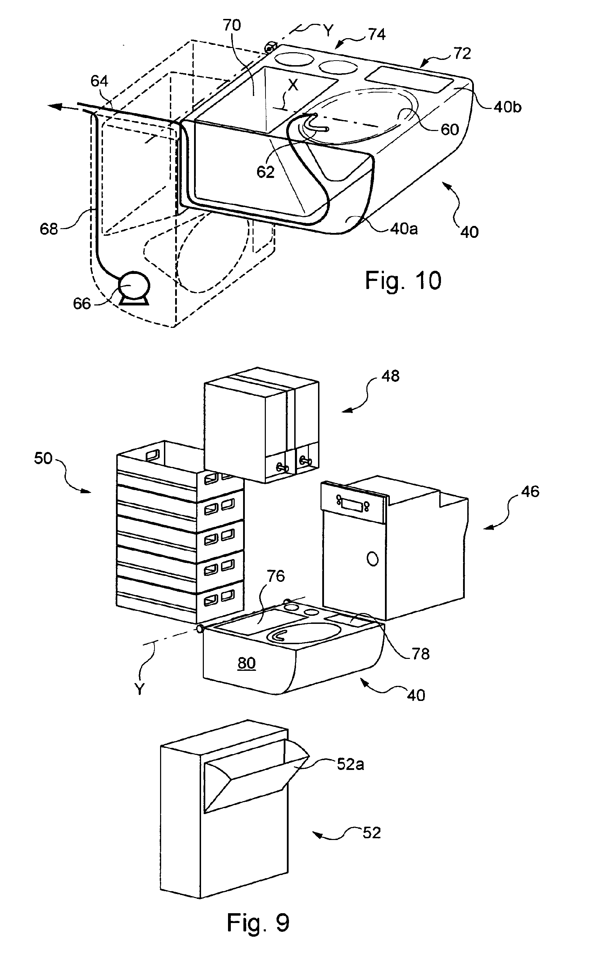

Ces éléments sont représentés sur la figure 9, sans le meuble, afin d'illustrer l'encombrement spatial généré par ces équipements et leurs diverses dispositions spatiales les uns par rapport aux autres.

La figure 10 illustre de façon schématique le bloc évier 40 dans ses deux positions extrêmes suivant une vue en coupe qui montre l'intérieur de ce dernier.

Le bloc évier 40 comporte un récipient ou cuvette 60 à l'intérieur duquel de l'eau peut s'écouler par l'intermédiaire d'un robinet 62 escamotable (le robinet 62 peut passer de la position horizontale rangée représentée sur la figure 10 à une position de service obtenue par rotation autour d'un axe horizontal X illustré schématiquement sur la figure 10).

On notera que dans la présente description les positions horizontale ou verticale des différents éléments agencés à bord de l'aéronef sont comprises comme étant respectivement parallèle ou perpendiculaire au plancher 16.

Un raccord souple 64, relié à ce robinet, passe près de l'axe d'articulation horizontal Y formant charnière et autour duquel le bloc évier 40 est monté pivotant.

La coupe de la figure 10 fait apparaître un double fond entre le fond du récipient 60 et le fond 40a du bloc évier dans lequel l'eau provenant du robinet 62 et s'étant écoulée dans le récipient 60 peut être stockée temporairement le temps de son évacuation.

Une pompe 62, installée en partie basse du bloc évier, est reliée à un raccord 68 qui permet l'évacuation de l'eau comme indiqué par la flèche.

L'évacuation de l'eau est effectuée par déclenchement automatique de la pompe dès que du liquide s'est écoulé.

On notera que, grâce au double fond qui retient le liquide, il n'est pas nécessaire d'attendre que tout le liquide soit évacué pour basculer le bloc en position de rangement.

Un clapet anti-retour de sécurité (non représenté) est prévu dans la partie basse du récipient 60 par laquelle s'écoule l'eau afin d'empêcher un retour de celle-ci lorsque l'évier est basculé dans sa positon de rangement et que le niveau d'eau atteint la bonde du récipient.

Le bloc évier 40 comporte également une pluralité de rangements 70, 72, 74 intégrés dans le bloc autour de la cuvette 60. Parmi ces différents rangements on trouve un compartiment 70 de grandes dimensions qui tire profit du volume interne au bloc évier délimité par la paroi de fond 40a et par la paroi supérieure 40b constituant un plan de travail pour le bloc 40.

On notera que la forme interne du rangement 70 est adaptée à la forme interne du récipient 60 (en suivant au moins en partie son contour) afin de perdre le moins de volume disponible à l'intérieur du bloc.

Le compartiment 70 est muni d'une trappe d'accès 76 dont l'ouverture est sécurisée afin que celle-ci ne s'ouvre pas lorsque le bloc est rangé en position verticale.

Un deuxième compartiment de rangement 72 est prévu dans le volume interne du caisson 40 et est également équipé d'une trappe sécurisée 78 pour empêcher toute ouverture intempestive lorsqu'elle n'est pas volontairement sollicitée.

Plusieurs rangements 74 qui sont réalisés sous la forme d'évidements de formes sensiblement cylindriques et dotés d'une paroi de fond servent par exemple à stocker de façon temporaire des gobelets lorsque le bloc est en position horizontale. On notera que ces empochements sont inclinés pour que, en position de rangement verticale du bloc, les gobelets propres ou usagés, empilés ou non, soient inclinés vers le haut et non horizontaux (prise facilitée, liquide non renversé...).

Le bloc évier 40 constitue un ensemble monobloc formé de deux pièces moulées et qui ont été ensuite fixées l'une à l'autre par exemple par collage.

Les deux pièces sont une pièce supérieure comprenant la paroi supérieure 40b et les différents volumes de récipients moulés 70, 72, 74 et une pièce inférieure comprenant la paroi de fond 40a et des parois verticales remontant vers la paroi supérieure 40b mais s'arrêtant à distance de celle-ci au niveau d'un plan de joint horizontal (quand le bloc est sorti) entre les pièces. On obtient ainsi un bloc fermé avec un volume interne utilisé.

Le bloc 40 forme ainsi un combiné évier-rangements escamotable qui peut être intégré dans d'autres types de meubles que celui décrit et représenté sur les figures.

Il peut par exemple être utilisé dans d'autres moyens de transport, véhicules ou engins de locomotion tels que des trains, là où les contraintes d'encombrement sont présentes.

On notera par ailleurs que le bloc 40 comporte également un système de verrouillage non représenté qui permet, lorsque le bloc est en position horizontale, de le maintenir de façon stable dans cette position.

Il peut par exemple s'agir de doigts poussés par des ressorts, agencés le long des flancs latéraux du bloc (un flanc 80 est représenté sur les figures 7 et 9) et qui s'engagent dans des logements du meuble lorsque le bloc est extrait du meuble. Une manette déportée reliée à des câbles agissant sur les doigts pour les rétracter hors de leurs logements est actionnée par un utilisateur lorsque le bloc doit être rentré.

On notera en outre que la poubelle 52 est pourvue d'une ouverture 52a orientée vers le haut et qui est amovible grâce à un mouvement de pivotement autour d'un axe horizontal.

## Revendications

1. Meuble d'office (20) d'aéronef séparant un poste de pilotage (10) d'une zone non sécurisée (22) de l'aéronef, comprenant deux parties séparées l'une de l'autre par une paroi sécurisée (24), l'une des parties étant accessible uniquement du poste de pilotage, l'autre étant accessible uniquement de la zone non sécurisée, **caractérisé en ce qu'**il comprend un décrochement (32) pratiqué dans la partie du meuble accessible du poste de pilotage.

2. Meuble d'office d'aéronef selon la revendication 1, **caractérisé en ce que** le décrochement est formé au niveau d'un des coins du meuble afin de dégager un espace libre supplémentaire pour le déplacement de l'équipage.

3. Meuble d'office d'aéronef selon la revendication 1 ou 2, **caractérisé en ce qu'**une zone (44) de stockage et de distribution de nourriture et de boissons est aménagée au niveau du décrochement.

4. Meuble d'office d'aéronef selon l'une des revendications 1 à 3, **caractérisé en ce qu'**il comporte, dans une partie du meuble accessible du poste de pilotage, un bloc évier (40) mobile susceptible d'occuper une position déployée d'utilisation et une position de rangement à l'intérieur du meuble.

5. Meuble d'office d'aéronef selon la revendication 4, **caractérisé en ce que** le bloc évier (40) est installé au niveau du décrochement.

6. Meuble d'office d'aéronef selon la revendication 4 ou 5, **caractérisé en ce que** le bloc évier (40) est un ensemble monobloc formé de deux pièces moulées et fixées l'une à l'autre.

7. Meuble d'office d'aéronef selon l'une des revendications 4 à 6, **caractérisé en ce que** le bloc évier (40) comprend une pluralité de rangements (70, 72, 74).

8. Aéronef comprenant un meuble d'office (20) selon l'une des revendications 1 à 7.

9. Aéronef selon la revendication 8, **caractérisé en ce que** le décrochement (32) est agencé à l'aplomb d'une trappe (14) disposée au niveau du plancher (16) du poste de pilotage (10) et permettant l'accès à un niveau de l'aéronef situé en dessous du niveau du poste de pilotage.

10. Aéronef selon la revendication 9, **caractérisé en ce que** la forme du décrochement (32) correspond au volume nécessaire au passage d'une personne par la trappe d'accès (14).

## Patentansprüche

1. Funktionsmöbelstück (20) für Luftfahrzeuge, das ein Cockpit (10) von einem nicht gesicherten Bereich (22) des Luftfahrzeugs trennt, enthaltend zwei Teilbereiche, die durch eine gesicherte Wand (24) voneinander getrennt sind, wobei einer der Teilbereiche nur von dem Cockpit aus zugänglich ist, wobei der andere nur von dem nicht gesicherten Bereich aus zugänglich ist, **dadurch gekennzeichnet, dass** es einen Absatz (32) aufweist, der in dem vom Cockpit aus zugänglichen Teilbereich des Möbelstücks ausgeführt ist.

2. Funktionsmöbel für Luftfahrzeuge nach Anspruch 1, **dadurch gekennzeichnet, dass** der Absatz im Bereich einer der Ecken des Möbelstücks ausgebildet ist, um einen zusätzlichen Freiraum für die Verlagerung der Besatzung freizugeben.

3. Funktionsmöbelstück für Luftfahrzeuge nach einem der Ansprüche 1 bis 2, **dadurch gekennzeichnet, dass** ein Bereich (44) zum Lagern und Ausgeben von Nahrungsmitteln und Getränken im Bereich des Absatzes eingerichtet ist.

4. Funktionsmöbelstück für Luftfahrzeuge nach einem der Ansprüche 1 bis 3, **dadurch gekennzeichnet, dass** es in einem vom Cockpit aus zugänglichen Teilbereich des Möbelstücks einen beweglichen Spülenblock (40) aufweist, der eine ausgefahrene Nutzposition und eine Position zum Verstauen innerhalb des Möbelstücks einnehmen kann.

5. Funktionsmöbelstück für Luftfahrzeuge nach Anspruch 4, **dadurch gekennzeichnet, dass** der Spülenblock (40) im Bereich des Absatzes eingebaut ist.

6. Funktionsmöbelstück für Luftfahrzeuge nach Anspruch 4 oder 5, **dadurch gekennzeichnet, dass** der Spülenblock (40) eine einstückige Einheit ist, die aus zwei geformten und aneinander befestigten Teilen besteht.

7. Funktionsmöbelstück für Luftfahrzeuge nach einem der Ansprüche 4 bis 6, **dadurch gekennzeichnet, dass** der Spülenblock (40) eine Mehrzahl von Ablagen (70, 72, 74) aufweist.

8. Luftfahrzeug mit einem Funktionsmöbelstück (20) nach einem der Ansprüche 1 bis 7.

9. Luftfahrzeug nach Anspruch 8, **dadurch gekennzeichnet, dass** der Absatz (32) lotrecht zu einer Klappe (14) angeordnet ist, die im Bereich des Bodens (16) des Cockpits (10) angeordnet ist und den Zugang zu einem Niveau des Luftfahrzeugs gestattet, das unter dem Niveau des Cockpits liegt.

10. Luftfahrzeug nach Anspruch 9, **dadurch gekennzeichnet, dass** die Form des Absatzes (32) dem Raumvolumen entspricht, das für den Durchtritt einer Person durch die Zugangsklappe (14) erforderlich ist.

## Claims

1. Aircraft galley unit (20) separating a cockpit (10) from an unsecured zone (22) of the aircraft, comprising two parts separated from one another by a secured wall (24), one of the parts being accessible only from the cockpit, the other being accessible only from the unsecured zone, **characterized in that** it comprises a recess (32) implemented in the part of the unit accessible from the cockpit.

2. Aircraft galley unit according to claim 1, **characterized in that** the recess is formed at one of the corners of the unit in order to clear an additional free space for movement of the crew.

3. Aircraft galley unit according to claim 1 or 2, **characterized in that** a zone (44) for storage and distribution of food and beverages is laid out at the recess.

4. Aircraft galley unit according to one of claims 1 to 3, **characterized in that** it comprises, in a portion of the unit accessible from the cockpit, a movable sink block (40) able to occupy a deployed use position and a storage position inside the unit.

5. Aircraft galley unit according to claim 4, **characterized in that** sink block (40) is installed at the recess.

6. Aircraft galley unit according to claim 4 or 5, **characterized in that** the sink block (40) is a one-piece assembly made up of two cast parts fastened to one another.

7. Aircraft galley unit according to one of claims 4 to 6, **characterized in that** sink block (40) comprises a plurality of storage spaces (70, 72, 74).

8. Aircraft comprising a galley unit (20) according to one of claims 1 to 7.

9. Aircraft according to claim 8, **characterized in that** recess (32) is arranged at the base of a hatch (14) in a vertical direction arranged at the floor (16) of the cockpit (10) and allowing access to a level of the aircraft situated below the level of the cockpit.

10. Aircraft according to claim 9, **characterized in that** the form of recess (32) corresponds to the volume needed for the passage of an individual through the access hatch (14).
